# EUROPEAN PATENT APPLICATION

(11) **EP 4 509 580 A1**
(43) Date of publication of application: **19.02.2025**
(21) Application number: 23788403.6
(22) Date of filing: 13.04.2023
(51) Int. Cl.: C09K 15/02, C09K 15/18, C09K 15/20, C08K 5/3432, C08K 3/36

(54) **LIGHT STABILIZER COMPOSITION, METHOD FOR PRODUCING RESIN COMPOSITION CONTAINING SAME, METHOD FOR IMPROVING BLOCKING RESISTANCE OF LIGHT STABILIZER COMPOSITION, AND HINDERED AMINE COMPOUND USED IN THESE**

(30) Priority: 13.04.2022 JP 2022066532
(71) Applicant: Adeka Corporation, Tokyo 116-8554 (JP)
(72) Inventor: AYABE, Takashi, Saitama-shi, Saitama 336-0022 (JP); MIYAMURA, Daichi, Saitama-shi, Saitama 336-0022 (JP)
(74) Representative: Müller-Boré & Partner Patentanwälte PartG mbB
(86) International application number: PCT/JP2023/015056
(87) International publication number: WO 2023/199986

(57) **Abstract**

The present invention provides a light stabilizer composition having an improved blocking resistance, a method of producing a resin composition containing the same, a method of improving the blocking resistance of a light stabilizer composition, and a hindered amine compound for use in any of these. The light stabilizer composition according to the present invention contains a hindered amine compound and silica, wherein the hindered amine compound includes a compound represented by the following general formula (1), and the value of agglomerate hardness, as measured by a predetermined measurement method, is 55 N or less. (In the general formula (1), R¹ represents a hydrogen atom or the like; and R² represents an alkyl group or the like.)

## Description

### TECHNICAL FIELD

The present invention relates to a light stabilizer composition, a method of producing a resin composition containing the same, a method of improving the blocking resistance of a light stabilizer composition, and a hindered amine compound for use in any of these. More particularly, the present invention relates to a light stabilizer composition having an improved blocking resistance, a method of producing a resin composition containing the same, a method of improving the blocking resistance of a light stabilizer composition, and a hindered amine compound for use in any of these.

### BACKGROUND ART

Various types of hindered amine compounds are used as light stabilizers for imparting light stability to synthetic resins. Hindered amine compounds may be in the form of a liquid or a solid having a low melting point, depending on the molecular structure. In such a case, there has been room for improvement in terms of handleability.

For example, the following Patent Document 1 proposes, as one of the methods of improving the handleability of hindered amine compounds, a technique of blending a hindered amine compound with silica to form a light stabilizer composition.

### RELATED ART DOCUMENT

### PATENT DOCUMENT

[Patent Document 1] WO 2015/079896

### SUMMARY OF THE INVENTION

### PROBLEMS TO BE SOLVED BY THE INVENTION

However, the light stabilizer composition disclosed in the above-described Patent Document 1 has room for further improvement in terms of preventing blocking during storage.

Accordingly, an object of the present invention is to provide a light stabilizer composition having an improved blocking resistance, a method of producing a resin composition containing the same, a method of improving the blocking resistance of a light stabilizer composition, and a hindered amine compound for use in any of these.

### MEANS FOR SOLVING THE PROBLEMS

As a result of intensive studies to solve the problem mentioned above, the present inventors have found out that, in a light stabilizer composition containing a hindered amine compound and silica, it is possible to solve the above-mentioned problem by appropriately selecting the hindered amine and the silica, and by controlling the properties of the light stabilizer composition, thereby completing the present invention.

Specifically, the light stabilizer composition according to the present invention is characterized by containing:
a hindered amine compound; and
silica;
wherein the hindered amine compound includes a compound represented by the following general formula (1): 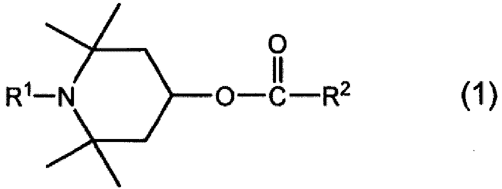 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 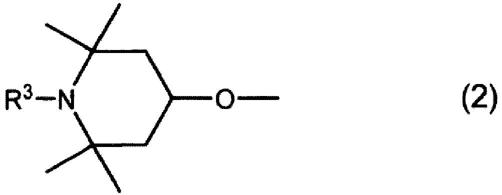 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)),
   and
wherein the value of agglomerate hardness, as measured by the following measurement method, is 55 N or less.

### [Measurement Method of Agglomerate Hardness]

(1) The light stabilizer composition is filled into a cylindrical container having an inner diameter of 5.1 cm, to a height of 4 cm from the bottom of the container.
(2) An aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed.
(3) The load and the disk are removed, and the light stabilizer composition is additionally filled into the container to a height of 4 cm from the bottom of the container.
(4) The operations (2) and (3) are repeated until the volume of the light stabilizer composition stops decreasing during the compression in the operation (2).
(5) The disk is placed on top of the light stabilizer composition filled into the container, a load of 1 kgf is applied on top of the disk, and the light stabilizer composition is heated at 60°C for 6 hours.
(6) The light stabilizer composition is cooled at -15°C for 6 hours, after the completion of the heating.
(7) The light stabilizer composition is left to stand at 15°C for 6 hours, after the completion of the cooling.
(8) The load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

In the light stabilizer composition according to the present invention, the silica is preferably impregnated with at least one kind of the hindered amine compounds. In the light stabilizer composition according to the present invention, the silica is preferably silica produced by the gel method. The light stabilizer composition according to the present invention preferably has a packed bulk density of 0.20 g/cm³ or more. The light stabilizer composition according to the present invention preferably has a melting point of 30°C or lower. Further, the light stabilizer composition according to the present invention preferably has an enthalpy of fusion of 50 J/g or less.

The method of producing a resin composition according to the present invention is characterized by including a blending step of blending the light stabilizer composition according to the present invention, with a synthetic resin.

The method of improving the blocking resistance of a light stabilizer composition according to the present invention is characterized by including blending:
a hindered amine compound; with
silica;
such that the value of agglomerate hardness, as measured by the following measurement method, achieves 55 N or less,
wherein the hindered amine compound includes a compound represented by the following general formula (1): 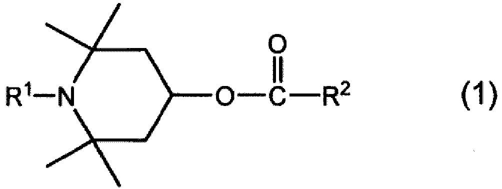 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 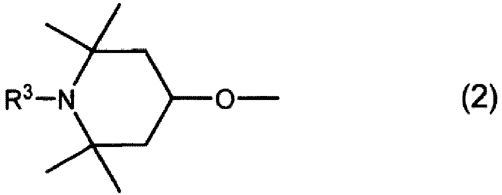 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)).

### [Measurement Method of Agglomerate Hardness]

(1) The light stabilizer composition is filled into a cylindrical container having an inner diameter of 5.1 cm, to a height of 4 cm from the bottom of the container.
(2) An aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed.
(3) The load and the disk are removed, and the light stabilizer composition is additionally filled into the container to a height of 4 cm from the bottom of the container.
(4) The operations (2) and (3) are repeated until the volume of the light stabilizer composition stops decreasing during the compression in the operation (2).
(5) The disk is placed on top of the light stabilizer composition filled into the container, a load of 1 kgf is applied on top of the disk, and the light stabilizer composition is heated at 60°C for 6 hours.
(6) The light stabilizer composition is cooled at -15°C for 6 hours, after the completion of the heating.
(7) The light stabilizer composition is left to stand at 15°C for 6 hours, after the completion of the cooling.
(8) The load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

The hindered amine compound according to the present invention is characterized in that it is a hindered amine compound for use in a light stabilizer composition which contains a hindered amine compound and silica, and in which the value of agglomerate hardness, as measured by the following measurement method, is 55 N or less,
wherein the hindered amine compound includes a compound represented by the following general formula (1): 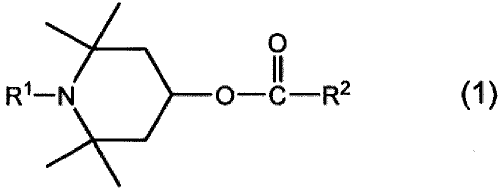 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 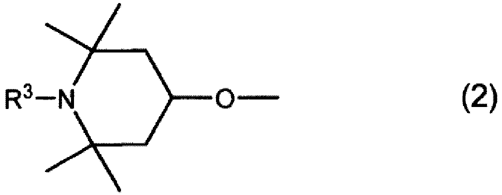 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)).

### [Measurement Method of Agglomerate Hardness]

(1) The light stabilizer composition is filled into a cylindrical container having an inner diameter of 5.1 cm, to a height of 4 cm from the bottom of the container.
(2) An aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed.
(3) The load and the disk are removed, and the light stabilizer composition is additionally filled into the container to a height of 4 cm from the bottom of the container.
(4) The operations (2) and (3) are repeated until the volume of the light stabilizer composition stops decreasing during the compression in the operation (2).
(5) The disk is placed on top of the light stabilizer composition filled into the container, a load of 1 kgf is applied on top of the disk, and the light stabilizer composition is heated at 60°C for 6 hours.
(6) The light stabilizer composition is cooled at -15°C for 6 hours, after the completion of the heating.
(7) The light stabilizer composition is left to stand at 15°C for 6 hours, after the completion of the cooling.
(8) The load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

Another light stabilizer composition according to the present invention is characterized by containing:
a hindered amine compound; and
silica produced by the gel method;
wherein the hindered amine compound includes a compound represented by the following general formula (1): 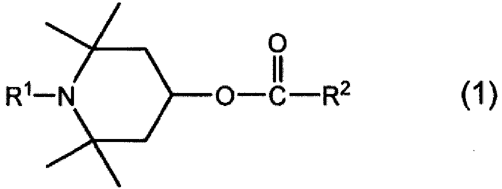 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 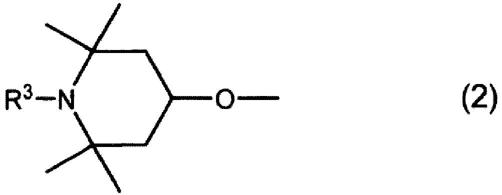 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)).

In the other light stabilizer composition according to the present invention, the silica is preferably impregnated with at least one kind of the hindered amine compounds. The other light stabilizer composition according to the present invention preferably has a packed bulk density of 0.20 g/cm³ or more. The other light stabilizer composition according to the present invention preferably has a melting point of 30°C or lower. The other light stabilizer composition according to the present invention preferably has an enthalpy of fusion of 50 J/g or less. Further, in the other light stabilizer composition according to the present invention, the value of agglomerate hardness, as measured by the following measurement method, is preferably 55 N or less.

### [Measurement Method of Agglomerate Hardness]

(1) The light stabilizer composition is filled into a cylindrical container having an inner diameter of 5.1 cm, to a height of 4 cm from the bottom of the container.
(2) An aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed.
(3) The load and the disk are removed, and the light stabilizer composition is additionally filled into the container to a height of 4 cm from the bottom of the container.
(4) The operations (2) and (3) are repeated until the volume of the light stabilizer composition stops decreasing during the compression in the operation (2).
(5) The disk is placed on top of the light stabilizer composition filled into the container, a load of 1 kgf is applied on top of the disk, and the light stabilizer composition is heated at 60°C for 6 hours.
(6) The light stabilizer composition is cooled at -15°C for 6 hours, after the completion of the heating.
(7) The light stabilizer composition is left to stand at 15°C for 6 hours, after the completion of the cooling.
(8) The load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

The method of producing another resin composition according to the present invention is characterized by including a blending step of blending the light stabilizer composition according to the present invention, with a synthetic resin.

The method of improving the blocking resistance of another light stabilizer composition according to the present invention is characterized by including blending:
a hindered amine compound including a compound represented by the following general formula (1): 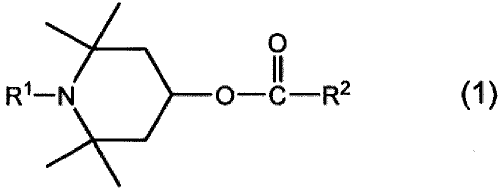 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 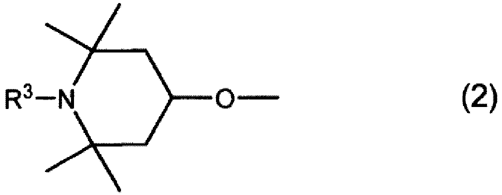 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms));
   with
silica produced by the gel method.

The hindered amine compound according to the present invention is characterized in that it is a hindered amine compound for use in a light stabilizer composition, the composition containing:
a hindered amine compound; and
silica produced by the gel method;
wherein the hindered amine compound includes a compound represented by the following general formula (1): 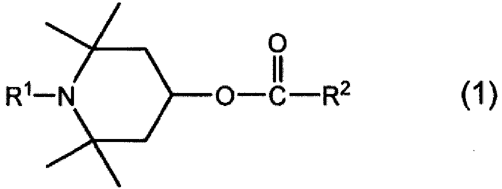 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 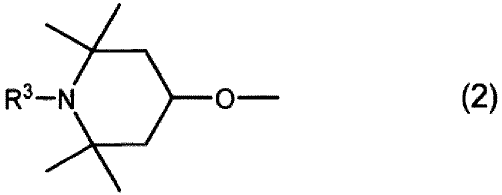 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)).

### EFFECTS OF THE INVENTION

According to the present invention, it is possible to provide a light stabilizer composition having an improved blocking resistance, a method of producing a resin composition containing the same, a method of improving the blocking resistance of a light stabilizer composition, and a hindered amine compound for use in any of these.

### MODE FOR CARRYING OUT THE INVENTION

A first embodiment of the present invention will be described below in detail.

### < Light Stabilizer Composition >

The light stabilizer composition according to the first embodiment contains a hindered amine compound which includes a compound represented by the following general formula (1), and silica, and in which the value of agglomerate hardness, as measured by the following measurement method, is 55 N or less.

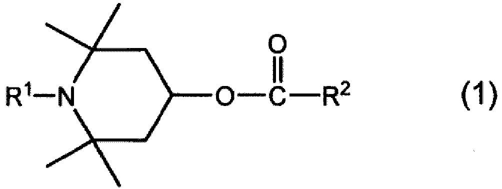

In the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2).

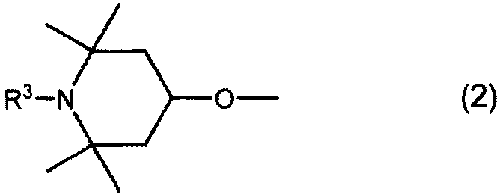

In the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms.

### [Measurement Method of Agglomerate Hardness]

(1) The light stabilizer composition is filled into a cylindrical container having an inner diameter of 5.1 cm, to a height of 4 cm from the bottom of the container.
(2) An aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed.
(3) The load and the disk are removed, and the light stabilizer composition is additionally filled into the container to a height of 4 cm from the bottom of the container.
(4) The operations (2) and (3) are repeated until the volume of the light stabilizer composition stops decreasing during the compression in the operation (2).
(5) The disk is placed on top of the light stabilizer composition filled into the container, a load of 1 kgf is applied on top of the disk, and the light stabilizer composition is heated at 60°C for 6 hours.
(6) The light stabilizer composition is cooled at -15°C for 6 hours, after the completion of the heating.
(7) The light stabilizer composition is left to stand at 15°C for 6 hours, after the completion of the cooling.
(8) The load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

The light stabilizer composition according to the present embodiment has an excellent blocking resistance. That is, the blocking resistance of the light stabilizer composition can be improved by the method of blending a hindered amine compound including a compound represented by the above-described general formula (1), with silica, such that the value of agglomerate hardness as measured by the above-described measurement method, achieves 55 N or less. Since the light stabilizer composition according to the present embodiment has an excellent blocking resistance, the light stabilizer composition has an excellent preservation stability, and further, has an excellent measurability and handleability.

The value of the agglomerate hardness is preferably 40 N or less, more preferably 30 N or less, still more preferably 20 N or less, and yet still more preferably 15 N or less, from the viewpoint of further improving the blocking resistance of the light stabilizer composition. The lower limit value of the agglomerate hardness is not particularly limited, and can be, for example, 1 N or more.

The value of the agglomerate hardness can be controlled by selecting the type of the hindered amine compound and the type (production method, volume average particle size, specific surface area and the like) of the silica to be contained in the light stabilizer composition, and by adjusting the content ratio between the hindered amine compound and the type of the silica.

The hindered amine compound contained in the light stabilizer composition according to the present embodiment, is a hindered amine compound for use in a light stabilizer composition which contains a hindered amine compound and silica, and in which the value of agglomerate hardness, as measured by the following measurement method, is 55 N or less. Further, as described above, the hindered amine compound contained in the light stabilizer composition according to the present embodiment includes a compound represented by the above-described general formula (1).

Examples of the substituted or unsubstituted alkyl group having from 1 to 30 carbon atoms and represented by R¹ include: methyl group, ethyl group, propyl group, isopropyl group, butyl group, isobutyl group, *sec*-butyl group, *tert*-butyl group, pentyl group, *sec*-pentyl group, *tert*-pentyl group, hexyl group, heptyl group, octyl group, isooctyl group, 2-ethylhexyl group, *tert*-octyl group, nonyl group, isononyl group, decyl group, undecyl group, dodecyl group, tridecyl group, tetradecyl group, pentadecyl group, hexadecyl group, heptadecyl group and octadecyl group.

The substituent of the alkyl group having from 1 to 30 carbon atoms may be, for example, a halogen atom such as a hydroxyl group, a fluorine atom, a chlorine atom, a bromine atom or an iodine atom, a nitro group, a cyano group or an amino group.

Examples of the substituted or unsubstituted alkoxy group having from 1 to 30 carbon atoms and represented by R¹ include a group in which the substituted or unsubstituted alkyl group having from 1 to 30 carbon atoms is bound to an oxygen atom.

Examples of the substituted or unsubstituted alkyl group having from 1 to 30 carbon atoms and represented by R² include the same groups as those exemplified for the substituted or unsubstituted alkyl group having from 1 to 30 carbon atoms and represented by the above-described R¹.

Examples of the substituted or unsubstituted alkenyl group having from 2 to 30 carbon atoms and represented by R² include a group in which any one carbon-carbon single bond of the substituted or unsubstituted alkyl group having from 1 to 30 carbon atoms (excluding a substituted or unsubstituted methyl group) represented by the above-described R¹ is replaced with a double bond.

Examples of the substituted or unsubstituted alkyl group having from 1 to 30 carbon atoms and represented by R³ include the same groups as those exemplified for the substituted or unsubstituted alkyl group having from 1 to 30 carbon atoms and represented by the above-described R¹. Examples of the substituted or unsubstituted alkoxy group having from 1 to 30 carbon atoms and represented by R³ include the same groups as those exemplified for the substituted or unsubstituted alkoxy group having from 1 to 30 carbon atoms and represented by the above-described R¹.

In the general formula (1), R² is preferably a substituted or unsubstituted alkyl group having from 1 to 30 carbon atoms, or a substituted or unsubstituted alkenyl group having from 2 to 30 carbon atoms, more preferably a substituted or unsubstituted alkyl group having from 1 to 30 carbon atoms, still more preferably an unsubstituted alkyl group having from 1 to 30 carbon atoms, and yet still more preferably an unsubstituted alkyl group having from 11 to 21 carbon atoms. R² may also be a group represented by the general formula (2).

When R² in the general formula (1) is a substituted or unsubstituted alkyl group having from 1 to 30 carbon atoms, or a substituted or unsubstituted alkenyl group having from 2 to 30 carbon atoms, R¹ is preferably a hydrogen atom, or a substituted or unsubstituted alkyl group having from 1 to 30 carbon atoms, more preferably a hydrogen atom or an unsubstituted alkyl group having from 1 to 30 carbon atoms, still more preferably a hydrogen atom or methyl group, and particularly preferably a hydrogen atom.

Further, when R² in the general formula (1) is a group represented by the general formula (2), R¹ is preferably a hydrogen atom, a substituted or unsubstituted alkyl group having from 1 to 30 carbon atoms, or a substituted or unsubstituted alkoxy group having from 1 to 30 carbon atoms, more preferably a substituted or unsubstituted alkoxy group having from 1 to 30 carbon atoms, still more preferably an unsubstituted alkoxy group having from 1 to 30 carbon atoms, and yet still more preferably an unsubstituted alkoxy group having from 5 to 21 carbon atoms.

In the general formula (2), R³ is preferably a hydrogen atom, a substituted or unsubstituted alkyl group having from 1 to 30 carbon atoms, or a substituted or unsubstituted alkoxy group having from 1 to 30 carbon atoms, more preferably a substituted or unsubstituted alkoxy group having from 1 to 30 carbon atoms, still more preferably an unsubstituted alkoxy group having from 1 to 30 carbon atoms, and yet still more preferably an unsubstituted alkoxy group having from 5 to 21 carbon atoms. Further, R³ is preferably the same group as R¹.

Specific examples of the compound represented by the general formula (1) include the following compounds. However, the compound represented by the general formula (1) is not limited to these compounds. 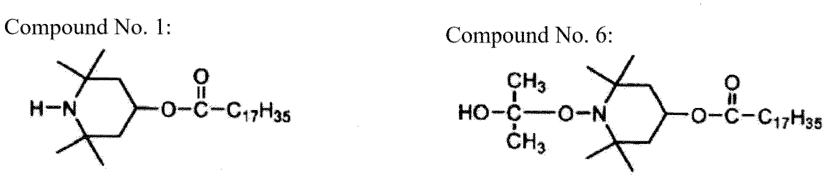 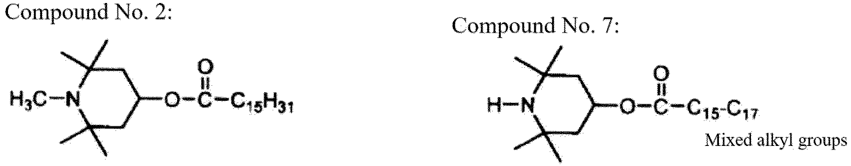 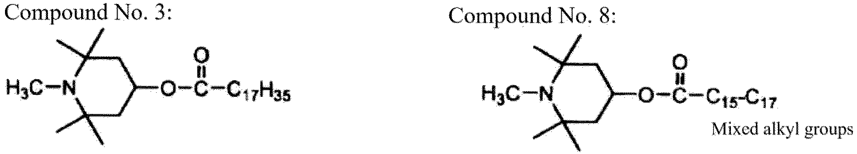 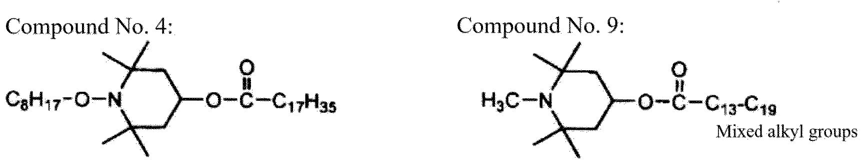 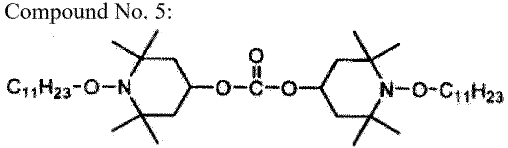 The hindered amine compound contained in the light stabilizer composition according to the present embodiment may include a hindered amine compound other than the compound represented by the above-described general formula (1).

The silica contained in the light stabilizer composition according to the present embodiment may be either a natural product or a synthesized product, and may be either crystalline or non-crystalline. Further, the silica may be one produced by a wet process such as the gel method, the precipitation method or the like, or may be one produced by a dry process such as the combustion method, arch discharge/plasma discharge or the like. The silica is preferably one produced by a wet process, more preferably one produced by the gel method or the precipitation method, and still more preferably one produced by the gel method, from the viewpoint of further improving the blocking resistance of the light stabilizer composition.

The volume average particle size of the silica contained in the light stabilizer composition according to the present embodiment is not particularly limited, and can be, for example, from 0.1 to 100 µm. The volume average particle size of the silica as used herein is a 50% cumulative particle size, as measured by the laser diffraction/scattering method in accordance with ISO-13320.

Further, the specific surface area of the silica contained in the light stabilizer composition according to the present embodiment is not particularly limited, and can be, for example, from 100 to 1,000 m²/g. The specific surface area of the silica contained in the light stabilizer composition according to the present embodiment is preferably from 120 to 800 m²/g, more preferably from 150 to 600 m²/g, still more preferably from 180 to 500 m²/g, and yet still more preferably from 200 to 300 m²/g. The specific surface area of the silica as used herein is a BET specific surface area as measured in accordance with JIS Z 8830.

The amount of the silica contained in the light stabilizer composition according to the present embodiment is not particularly limited, and can be, for example, from 10 to 1,000 parts by mass with respect to 100 parts by mass of the hindered amine compound. The amount of the silica contained in the light stabilizer composition according to the present embodiment is preferably from 20 to 500 parts by mass, more preferably from 25 to 400 parts by mass, and still more preferably from 50 to 200 parts by mass, with respect to 100 parts by mass of the hindered amine compound.

The light stabilizer composition according to the present embodiment may further contain any other additives, such as a phenolic antioxidant, a phosphorus-based antioxidant, a thioether-based antioxidant, an ultraviolet absorber, a nucleating agent, a flame retardant, a flame retardant aid, a lubricant, a filler, a metal soap, a hydrotalcite, an antistatic agent, a pigment, a dye, etc.

The method of producing the light stabilizer composition according to the present embodiment is not particularly limited, and examples thereof include a method in which the hindered amine compound, silica, and any other additives, if necessary, are blended, and mixed using a known mixing apparatus such as a mixer.

In the light stabilizer composition according to the present embodiment, the silica is preferably impregnated with at least one kind of the hindered amine compounds. In other words, at least one kind of the hindered amine compounds is preferably retained in the pores of the silica in a state of liquid, or adsorbed or sorbed in the pores of the silica in a state of fine particulate solid.

Examples of the method of impregnating the silica with the hindered amine compound include: a method in which the hindered amine compound in a liquid or melted state is mixed with the silica under atmospheric pressure or reduced pressure; and a method in which a solution obtained by dissolving the hindered amine compound in a solvent is mixed with the silica, followed by removing the solvent.

The light stabilizer composition according to the present embodiment preferably has a melting point of 30°C or lower, more preferably 25°C or lower, still more preferably 20°C or lower, and yet still more preferably 15°C or lower, from the viewpoint of improving the dispersibility of the light stabilizer composition in a synthetic resin. The lower limit value of the melting point is not particularly limited, and can be, for example, -50°C or higher. In the present embodiment, the "melting point" refers to the peak-top temperature (°C) of the endothermic peak that first appears in the heating process of differential scanning calorimetry.

Further, the light stabilizer composition according to the present embodiment preferably has an enthalpy of fusion of 50 J/g or less, and more preferably 35 J/g or less, from the viewpoint of improving the dispersibility of the light stabilizer composition in a synthetic resin. The lower limit value of the enthalpy of fusion is not particularly limited, and can be, for example, 5 J/g or more. In the present embodiment, the "enthalpy of fusion" refers to the change in enthalpy (J/g) calculated based on the area of the endothermic peak that first appears in the heating process of differential scanning calorimetry.

In addition, the light stabilizer composition according to the present embodiment preferably has a packed bulk density of 0.20 g/cm³ or more, more preferably 0.25 g/cm³ or more, still more preferably 0.30 g/cm³ or more, yet still more preferably 0.35 g/cm³ or more, and particularly preferably 0.40 g/cm³ or more, from the viewpoint of improving the handleability of the light stabilizer composition. In the present embodiment, the "packed bulk density" refers to the bulk density (g/cm³), as measured by a method in accordance with JIS K 5101-12-2.

The light stabilizer composition according to the present embodiment is capable of imparting an excellent light stability to a synthetic resin, such as a polyolefin resin, a polyester resin, a polycarbonate resin, a polyamide resin, a polyurethane resin, an acrylic resin, a halogen-containing resin, an epoxy resin, a phenol resin, a urea resin, a melamine resin, a silicone resin, a natural rubber or a synthetic rubber. The light stabilizer composition can be used as a component of a resin composition for a molded article such as an automobile part, a construction material, a farming material, a packaging material, a daily commodity or a toy, a resin composition for a coating material or a resin composition for a sealing material.

### < Method of Producing Resin Composition >

The method of producing a resin composition according to the present embodiment includes a blending step of blending the light stabilizer composition described above, with a synthetic resin.

According to the method of producing a resin composition of the present embodiment, it is possible to produce a resin composition having an excellent weatherability, efficiently and with a uniform quality, because a light stabilizer composition having an excellent blocking resistance as well as an excellent measurability and handleability is used, as a light stabilizer to be blended with a synthetic resin.

Examples of the synthetic resin include polyolefin resins, polyester resins, polycarbonate resins, polyamide resins, polyurethane resins, acrylic resins, halogen-containing resins, epoxy resins, phenol resins, urea resins, melamine resins, silicone resins, natural rubbers and synthetic rubbers.

In the method of producing a resin composition according to the present embodiment, the blending amount of the light stabilizer composition can be, for example, from 0.001 to 10 parts by mass, with respect to 100 parts by mass of the synthetic resin. From the viewpoint of sufficiently reducing the bleeding or blooming of components contained in the light stabilizer composition while improving the weatherability of the resin composition, the blending amount of the light stabilizer composition is preferably from 0.01 to 5 parts by mass, more preferably from 0.05 to 3 parts by mass, and still more preferably from 0.01 to 1 part by mass, with respect to 100 parts by mass of the synthetic resin.

Any other additives, such as a phenolic antioxidant, a phosphorus-based antioxidant, a thioether-based antioxidant, an ultraviolet absorber, a nucleating agent, a flame retardant, a flame retardant aid, a lubricant, a filler, a metal soap, a hydrotalcite, an antistatic agent, a pigment, a dye, etc., may further, be blended with the synthetic resin.

The method of blending the light stabilizer composition with the synthetic resin is not particularly limited. Examples thereof include a method in which the synthetic resin, the light stabilizer composition, and any other additives, if necessary, are mixed in advance, using any of various mixers, such as a tumble mixer, an FM mixer, etc., and then the resulting mixture is meld-kneaded using a Banbury mixer, rolls, a Brabender, a single-screw kneading extruder, a twin-screw kneading extruder, a kneader or the like.

The resin composition produced by the method of producing a resin composition according to the present embodiment can be used, for example, for forming a molded article, such as an injection-molded article, fibers, a biaxially-stretched film, a uniaxially stretched film, a non-stretched film, a sheet, a molded article formed by thermoforming, an extrusion blow-molded article, an injection blow-molded article, a molded article formed by injection stretching blow molding, a molded article formed by profile extrusion molding or a rotationally molded article, and more specifically, for forming a member for a vehicle, a household product, a food packaging material or the like. Further, the resin composition produced by the method of producing a resin composition according to the present embodiment can be used, for example, for forming a coating film, by coating the resin composition on a substrate composed of a metal, a resin or the like, as a coating material, followed by curing. The thus formed molded article and coating film have an excellent weatherability.

### < Method of Improving Blocking Resistance of Light Stabilizer Composition >

The method of improving the blocking resistance of a light stabilizer composition according to the present embodiment is a method in which a hindered amine compound including a compound represented by the general formula (1) is blended with silica, such that the value of agglomerate hardness, as measured by the following measurement method, achieves 55 N or less.

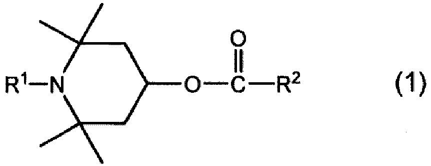

In the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2).

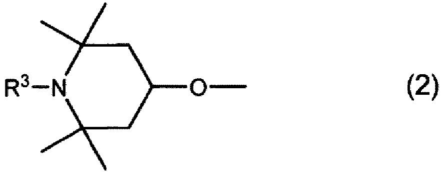

In the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms.

### [Measurement Method of Agglomerate Hardness]

(1) The light stabilizer composition is filled into a cylindrical container having an inner diameter of 5.1 cm, to a height of 4 cm from the bottom of the container.
(2) An aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed.
(3) The load and the disk are removed, and the light stabilizer composition is additionally filled into the container to a height of 4 cm from the bottom of the container.
(4) The operations (2) and (3) are repeated until the volume of the light stabilizer composition stops decreasing during the compression in the operation (2).
(5) The disk is placed on top of the light stabilizer composition filled into the container, a load of 1 kgf is applied on top of the disk, and the light stabilizer composition is heated at 60°C for 6 hours.
(6) The light stabilizer composition is cooled at -15°C for 6 hours, after the completion of the heating.
(7) The light stabilizer composition is left to stand at 15°C for 6 hours, after the completion of the cooling.
(8) The load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

Since the method according to the present embodiment enables to improve the blocking resistance of a light stabilizer composition, the resulting light stabilizer composition has an excellent preservation stability, and further, has an excellent measurability and handleability.

In the method of improving the blocking resistance of a light stabilizer composition according to the present embodiment, examples of the hindered amine compound and the silica include the same as those contained in the light stabilizer composition described above. The blending amount of the silica can be, for example, from 10 to 1,000 parts by mass, preferably from 20 to 500 parts by mass, more preferably from 25 to 400 parts by mass, and still more preferably from 50 to 200 parts by mass, with respect to 100 parts by mass of the hindered amine compound.

In the method of improving the blocking resistance of a light stabilizer composition according to the present embodiment, it is preferred to impregnate the silica with at least one kind of the hindered amine compounds.

In the method of improving the blocking resistance of a light stabilizer composition according to the present embodiment, the method of blending the hindered amine compound with silica is not particularly limited, and examples thereof include a method in which the hindered amine compound, silica, and any other additives, if necessary, are blended, and mixed using a known mixing apparatus such as a mixer. Examples of the other additives include the same additives as those exemplified as the additives which may be contained in the light stabilizer composition described above.

A second embodiment of the present invention will be described below.

### < Light Stabilizer Composition >

The light stabilizer composition according to the second embodiment contains a hindered amine compound including a compound represented by the general formula (1) described above, and silica produced by the gel method.

The light stabilizer composition according to the present embodiment has an excellent blocking resistance. That is, the blocking resistance of the light stabilizer composition can be improved by the method of blending a hindered amine compound including a compound represented by the general formula (1), with silica produced by the gel method. Since the light stabilizer composition according to the present embodiment has an excellent blocking resistance, the light stabilizer composition has an excellent preservation stability, and further, has an excellent measurability and handleability.

In the light stabilizer composition according to the present embodiment, the types of the hindered amine compound and of the silica produced by the gel method, the amount of the silica produced by the gel method and contained in the light stabilizer composition, other additives which may further be contained in the light stabilizer composition, the method of producing the light stabilizer composition, as well as the melting point, the enthalpy of fusion and the packed bulk density of the light stabilizer, can be the same as those exemplified for the light stabilizer composition according to the first embodiment.

The hindered amine compound contained in the light stabilizer composition according to the present embodiment is a hindered amine compound for use in a light stabilizer composition, the composition containing: a hindered amine compound; and silica produced by the gel method. Further, as described above, the hindered amine compound contained in the light stabilizer composition according to the present embodiment includes a compound represented by the above-described general formula (1).

In the light stabilizer composition according to the present embodiment, the silica is preferably impregnated with at least one kind of the hindered amine compounds.

In the light stabilizer composition according to the present embodiment, the value of the agglomerate hardness can be, for example, 55 N or less, from the viewpoint of further improving the blocking resistance of the light stabilizer composition. The value of the agglomerate hardness is preferably 40 N or less, more preferably 30 N or less, still more preferably 20 N or less, and yet still more preferably 15 N or less. Further, the lower limit value of the agglomerate hardness is not particularly limited, and can be, for example, 1 N or more. The "agglomerate hardness" as used herein has the same meaning as that described in the first embodiment.

The light stabilizer composition according to the present embodiment is capable of imparting an excellent light stability to a synthetic resin, and can be used as a component of a resin composition for a molded article, a resin composition for a coating material or a resin composition for a sealing material, in the same manner as in the light stabilizer composition according to the first embodiment.

### < Method of Producing Resin Composition >

The method of producing a resin composition according to the second embodiment includes a blending step of blending the light stabilizer composition described above, with a synthetic resin.

According to the method of producing a resin composition of the present embodiment, it is possible to produce a resin composition having an excellent weatherability, efficiently and with a uniform quality, because a light stabilizer composition having an excellent blocking resistance as well as an excellent measurability and handleability is used, as a light stabilizer to be blended with a synthetic resin.

Examples of the synthetic resin to be used in the method of producing a resin composition according to the present embodiment include the same synthetic resins as those used in the method of producing a resin composition according to the first embodiment. The blending amount of the light stabilizer composition with respect to the synthetic resin can be the same as the blending amount of the light stabilizer composition in the method of producing a resin composition in the first embodiment. Further, any of the other additives exemplified as those which may be blended in the method of producing a resin composition in the first embodiment, may further be blended with the synthetic resin. Further, examples of the method of blending the light stabilizer composition with the synthetic resin include the same blending method as that in the method of producing a resin composition according to the first embodiment. The resin composition produced by the method of producing a resin composition according to the present embodiment can be used for forming a molded article or a coating film, in the same manner as the resin composition produced by the method of producing a resin composition according to the first embodiment.

### < Method of Improving Blocking Resistance of Light Stabilizer Composition >

The method of improving the blocking resistance of a light stabilizer composition according to the second embodiment is a method in which a hindered amine compound including a compound represented by the general formula (1) described above is blended with silica produced by the gel method.

Since the method according to the present embodiment enables to improve the blocking resistance of a light stabilizer composition, the resulting light stabilizer composition has an excellent preservation stability, and further, has an excellent measurability and handleability.

In the method of improving the blocking resistance of a light stabilizer composition according to the present embodiment, it is preferred to impregnate the silica produced by the gel method with at least one kind of the hindered amine compounds.

In the method of improving the blocking resistance of a light stabilizer composition according to the present embodiment, the types of the hindered amine compound and of the silica produced by the gel method, the amount of the silica produced by the gel method and contained in the light stabilizer composition, as well as the method of blending the hindered amine compound with the silica produced by the gel method, can be the same as those exemplified for the method of improving the blocking resistance of a light stabilizer composition according to the first embodiment.

### EXAMPLES

The present invention will be described below further specifically, with reference to Examples. However, the present invention is in no way limited to the following Examples.

### < Preparation of Light Stabilizer Composition >

### (Examples 1 to 6 and Comparative Example 1)

In each of the Examples and Comparative Examples, 100 parts by mass of ADEKA STAB LA-40 (a mixture of 2,2,6,6-tetramethyl-4-piperidinyl stearate and 2,2,6,6-tetramethyl-4-piperidinyl palmitate) was heated and melted at 50°C, and introduced into an FM mixer (apparatus name: FM-20, manufactured by Nippon Coke & Engineering Co., Ltd.) along with 100 parts by mass of the silica shown in the following Table 1. The resulting mixture was mixed at 50°C for 20 minutes to impregnate the silica with ADEKA STABLA-40, to obtain the light stabilizer composition of each of Examples 1 to 6 and Comparative Example 1. The silicas used in the present Examples are as follows.
Silica-1: brand name: CARPEX BS-308N (silica produced by the gel method), manufactured by Evonik Industries AG
Silica-2: brand name: CARPEX BS-304F (silica produced by the gel method), manufactured by Evonik Industries AG
Silica-3: brand name: FINESIL X-12 (silica produced by the gel method), manufactured by Maruo Calcium Co., Ltd.
Silica-4: brand name: NIPGEL AZ-200 (silica produced by the gel method), manufactured by Tosoh Corporation
Silica-5: brand name: SIPERNAT 50 (silica produced by the precipitation method), manufactured by Evonik Industries AG
Silica-6: brand name: SIPERNAT 50S (silica produced by the precipitation method), manufactured by Evonik Industries AG
Silica-7: brand name: CARPEX No. 80 (silica produced by the precipitation method, manufactured by Evonik Industries AG

### < Evaluation of Properties >

### (Agglomerate Hardness)

First, a cylindrical tube composed of a polyvinyl chloride resin and having an inner diameter of 5.1 cm was prepared, and the cylindrical tube was equally divided in two parts in the direction parallel to the axial direction, to prepare a pair of half-cylindrical tubes having the same shape. Thereafter, the pair of half-cylindrical tubes were reassembled in the form of a cylindrical tube, and the outer periphery thereof is fixed with an adhesive tape, to form a cylindrical tube. Then the interior of the thus formed cylindrical tube was covered with a tetrafluoroethylene resin (PTFE) tape having a thickness of 0.2 mm. Subsequently, the resulting cylindrical tube was fixed on an aluminum sheet having a thickness of 1 mm, to form a cylindrical container having an inner diameter of 5.1 cm. Each of the light stabilizer compositions of Examples 1 to 6 and Comparative Example 1 was gradually filled into each container thus formed, to a height of 4 cm from the bottom of the container.

Next, an aluminum disk having a diameter of 5.0 cm and a thickness of 1 mm was placed on top of the light stabilizer composition filled into the container, a load of 3 kgf was applied on top of the disk, and the light stabilizer composition filled into the container was left to stand for one minute and compressed. At this time, the disk was placed such that the central axis of the cylinder in the container intersects the center of the circle of the disk.

Subsequently, the load and the disk were removed, and each light stabilizer composition was additionally filled into each container to a height of 4 cm from the bottom of the container.

Thereafter, the compression and the additional filling as described above were repeated until the volume of the light stabilizer composition stops decreasing during the compression, to fill the light stabilizer composition into the container.

The disk was placed on top of the light stabilizer composition which had been filled into the container in this manner, a load of 1 kgf was applied on top of the disk, and the light stabilizer composition was heated at 60°C for 6 hours.

The light stabilizer composition was cooled at -15°C for 6 hours, immediately after the completion of the heating. Then the light stabilizer composition was left to stand at 15°C for 6 hours, after the completion of the cooling.

After the completion of leaving the composition to stand, the load and the disk were removed, the adhesive tape fixed around the outer periphery of the cylindrical tube was removed to disassemble the cylindrical tube, a sample composed of each light stabilizer composition and formed in a cylindrical shape was retrieved from each container, and the retrieved sample was left to stand at 23°C and at a humidity of 50% for 10 minutes. Thereafter, a compression test was performed using a plate-like blade having a blade length of 3 cm and a blade thickness of 5 mm, as a compression fixture, and in accordance with JIS K7181, under the condition of a test speed of 50 mm/min, and the measured value at the maximum test force was defined as the agglomerate hardness (N). The results are shown in Table 1.

### (Melting Point and Enthalpy of Fusion)

A quantity of 10 mg of each of the light stabilizer compositions of Examples 1 to 6 and Comparative Example 1 was weighed onto an aluminum sample dish. The sample dish was placed on a differential scanning calorimeter (apparatus name: Diamond, manufactured by PerkinElmer Inc.), and calorimetry was performed to measure the melting point and the enthalpy of fusion. Specifically, each sample was heated from 25°C to 50°C at a rate of 10°C/min, maintained at 50°C for 10 minutes, then cooled to -10°C at a rate of 10°C/min, and maintained at -10°C for 10 minutes. Subsequently, the sample was heated to 50°C at a rate of 10°C/min. The peak-top temperature of the endothermic peak that first appears in the second heating process was defined as the melting point (°C) of each light stabilizer composition. Further, the enthalpy of fusion (J/g) of each light stabilizer composition was calculated from the area of the endothermic peak that appears first. The results are also shown in Table 1.

### (Packed Bulk Density)

The packed bulk density (g/cm³) was measured for each of the light stabilizer compositions of Examples 1 to 6 and Comparative Example 1, in accordance with JIS K 5101-12-2. The results are also shown in Table 1.

### (Blocking Resistance)

A preservation stability test was performed for each of the light stabilizer compositions of Examples 1 to 6 and Comparative Example 1, under the following conditions, and the state of each light stabilizer composition after the test was observed, to evaluate the blocking resistance of each composition. The conditions for the preservation stability test were as follows.

First, 10 kg of each of the light stabilizer compositions of Examples 1 to 6 and Comparative Example 1 was filled into a polyethylene bag having a capacity of 45 L, and the opening of the bag was sealed with a rubber band. Subsequently, the bag was placed in a rectangular cardboard box having a width of 35 cm, a depth of 29 cm and a height of 43 cm, and the cardboard box was sealed with an adhesive tape. Thereafter, the cardboard box was left to stand in a constant temperature chamber controlled to 50°C for 24 hours, and then left to stand in a constant temperature chamber controlled to 5°C for 30 days. Finally, the cardboard box was left to stand in a constant temperature and humidity chamber controlled to 25°C and at a humidity of 50% RH for one day, and the preservation stability test was completed. After the completion of the preservation stability test, the cardboard box and the polyethylene bag were opened in the constant temperature and humidity chamber controlled to 25°C and at a humidity of 50% RH, and each light stabilizer composition was retrieved.

The blocking resistance of each light stabilizer composition was evaluated in accordance with the following evaluation levels.
Level 1: No lump-like aggregated portion is observed in the composition.
Level 2: There are more portions that are not aggregated into lumps than lump-like aggregated portions.
Level 3: There are less portions that are not aggregated into lumps than lump-like aggregated portions.
Level 4; The entire composition is aggregated into lumps.
The numerical value of the evaluation level for each of the light stabilizer compositions of Examples 1 to 6 and Comparative Example 1 is also shown in Table 1, as an index of the blocking resistance.

**[Table 1]**

| | Example 1 | Example 2 | Example 3 | Example 4 | Example 5 | Example 6 | Comparative Example 1 |
|---|---|---|---|---|---|---|---|
| Silica | Silica-1 | Silica-2 | Silica-3 | Silica-4 | Silica-5 | Silica-6 | Silica-7 |
| Agglomerate hardness (N) | 6.7 | 12.4 | 36.1 | 35.9 | 30.4 | 53.7 | 64.8 |
| Melting point (°C) | 21.3 | 14.1 | 14.7 | 23.4 | 27.3 | 27.6 | 29.3 |
| Enthalpy of fusion (J/g) | 33.5 | 32.7 | 36.7 | 34.8 | 28.7 | 26.6 | 46.0 |
| Packed bulk density (g/cm³) | 0.55 | 0.44 | 0.57 | 0.25 | 0.35 | 0.32 | 0.31 |
| Blocking resistance | 1 | 1 | 2 | 2 | 3 | 3 | 4 |

The results shown in Table 1 revealed that the light stabilizer compositions of Examples 1 to 6 have a better blocking resistance, as compared to the light stabilizer composition of Comparative Example 1.

The above results confirmed that the light stabilizer composition according to the present invention has an excellent blocking resistance.

## Claims

1. A light stabilizer composition comprising:
a hindered amine compound; and
silica;
wherein the hindered amine compound comprises a compound represented by the following general formula (1): 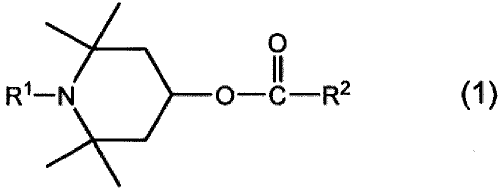 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 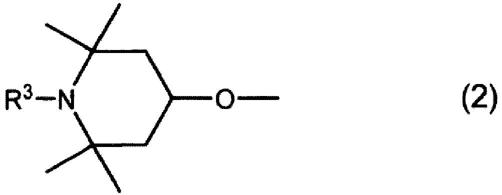 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)),
wherein the value of agglomerate hardness, as measured by the following measurement method, is 55 N or less, and
wherein the measurement method of the agglomerate hardness is as follows:
(1) the light stabilizer composition is filled into a cylindrical container having an inner diameter of 5.1 cm, to a height of 4 cm from the bottom of the container;
(2) an aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed;
(3) the load and the disk are removed, and the light stabilizer composition is additionally filled into the container to a height of 4 cm from the bottom of the container;
(4) the operations (2) and (3) are repeated until the volume of the light stabilizer composition stops decreasing during the compression in the operation (2);
(5) the disk is placed on top of the light stabilizer composition filled into the container, a load of 1 kgf is applied on top of the disk, and the light stabilizer composition is heated at 60°C for 6 hours;
(6) the light stabilizer composition is cooled at -15°C for 6 hours, after the completion of the heating;
(7) the light stabilizer composition is left to stand at 15°C for 6 hours, after the completion of the cooling; and
(8) the load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

2. The light stabilizer composition according to claim 1, wherein the silica is impregnated with at least one kind of the hindered amine compounds.

3. The light stabilizer composition according to claim 1 or 2, wherein the silica is silica produced by the gel method.

4. The light stabilizer composition according to any one of claims 1 to 3, wherein the light stabilizer composition has a packed bulk density of 0.20 g/cm³ or more.

5. The light stabilizer composition according to any one of claims 1 to 4, wherein the light stabilizer composition has a melting point of 30°C or lower.

6. The light stabilizer composition according to any one of claims 1 to 5, wherein the light stabilizer composition has an enthalpy of fusion of 50 J/g or less.

7. A method of producing a resin composition, the method comprising a blending step of blending the light stabilizer composition according to any one of claims 1 to 6, with a synthetic resin.

8. A method of improving the blocking resistance of a light stabilizer composition, the method comprising blending:
a hindered amine compound; with
silica;
such that the value of agglomerate hardness, as measured by the following measurement method, achieves 55 N or less,
wherein the hindered amine compound comprises a compound represented by the following general formula (1): 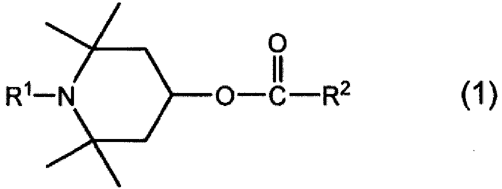 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 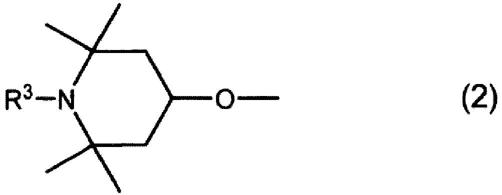 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)),
and
wherein the measurement method of the agglomerate hardness is as follows:
(1) the light stabilizer composition is filled into a cylindrical container having an inner diameter of 5.1 cm, to a height of 4 cm from the bottom of the container;
(2) an aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed;
(3) the load and the disk are removed, and the light stabilizer composition is additionally filled into the container to a height of 4 cm from the bottom of the container;
(4) the operations (2) and (3) are repeated until the volume of the light stabilizer composition stops decreasing during the compression in the operation (2);
(5) the disk is placed on top of the light stabilizer composition filled into the container, a load of 1 kgf is applied on top of the disk, and the light stabilizer composition is heated at 60°C for 6 hours;
(6) the light stabilizer composition is cooled at -15°C for 6 hours, after the completion of the heating;
(7) the light stabilizer composition is left to stand at 15°C for 6 hours, after the completion of the cooling; and
(8) the load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

9. A hindered amine compound for use in a light stabilizer composition which comprises a hindered amine compound and silica, and in which the value of agglomerate hardness, as measured by the following measurement method, is 55 N or less,
wherein the hindered amine compound comprises a compound represented by the following general formula (1): 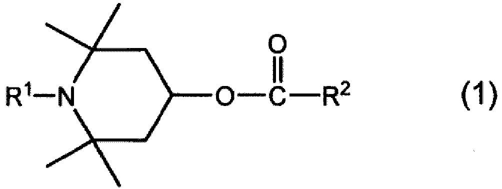 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 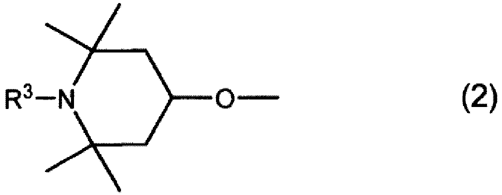 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)),
and
wherein the measurement method of the agglomerate hardness is as follows:
(1) the light stabilizer composition is filled into a cylindrical container having an inner diameter of 5.1 cm, to a height of 4 cm from the bottom of the container;
(2) an aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed;
(3) the load and the disk are removed, and the light stabilizer composition is additionally filled into the container to a height of 4 cm from the bottom of the container;
(4) the operations (2) and (3) are repeated until the volume of the light stabilizer composition stops decreasing during the compression in the operation (2);
(5) the disk is placed on top of the light stabilizer composition filled into the container, a load of 1 kgf is applied on top of the disk, and the light stabilizer composition is heated at 60°C for 6 hours;
(6) the light stabilizer composition is cooled at -15°C for 6 hours, after the completion of the heating;
(7) the light stabilizer composition is left to stand at 15°C for 6 hours, after the completion of the cooling; and
(8) the load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

10. A light stabilizer composition comprising:
a hindered amine compound; and
silica produced by the gel method;
wherein the hindered amine compound comprises a compound represented by the following general formula (1): 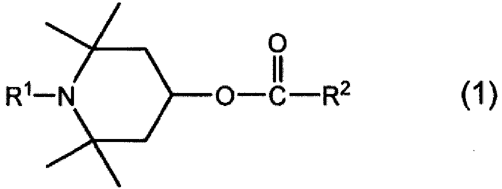 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 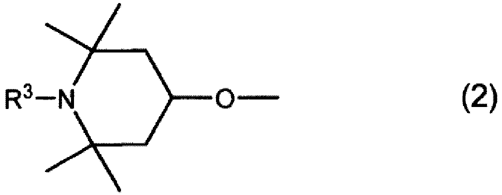 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)).

11. The light stabilizer composition according to claim 10, wherein the silica is impregnated with at least one kind of the hindered amine compounds.

12. The light stabilizer composition according to claim 10 or 11, wherein the light stabilizer composition has a packed bulk density of 0.20 g/cm³ or more.

13. The light stabilizer composition according to any one of claims 10 to 12, wherein the light stabilizer composition has a melting point of 30°C or lower.

14. The light stabilizer composition according to any one of claims 10 to 13, wherein the light stabilizer composition has an enthalpy of fusion of 50 J/g or less.

15. The light stabilizer composition according to any one of claims 10 to 14, wherein the value of agglomerate hardness, as measured by the following measurement method, is 55 N or less,
wherein the measurement method of the agglomerate hardness is as follows:
(1) the light stabilizer composition is filled into a cylindrical container having an inner diameter of 5.1 cm, to a height of 4 cm from the bottom of the container;
(2) an aluminum disk having a diameter of 5.0 cm and a thickness of 1 mm is placed on top of the light stabilizer composition filled into the container, a load of 3 kgf is applied on top of the disk, and the light stabilizer composition filled into the container is left to stand for one minute and compressed;
(3) the load and the disk are removed, and the light stabilizer composition is additionally filled into the container to a height of 4 cm from the bottom of the container;
(4) the operations (2) and (3) are repeated until the volume of the light stabilizer composition stops decreasing during the compression in the operation (2);
(5) the disk is placed on top of the light stabilizer composition filled into the container, a load of 1 kgf is applied on top of the disk, and the light stabilizer composition is heated at 60°C for 6 hours;
(6) the light stabilizer composition is cooled at -15°C for 6 hours, after the completion of the heating;
(7) the light stabilizer composition is left to stand at 15°C for 6 hours, after the completion of the cooling; and
(8) the load and the disk are removed, a sample composed of the light stabilizer composition and formed in a cylindrical shape is retrieved from the container, and the retrieved sample is left to stand at 23°C and at a humidity of 50% for 10 minutes; thereafter, a compression test is performed using a plate-like blade having a blade length of 3 cm and a blade thickness of 5 mm, as a compression fixture, and in accordance with JIS K7181, under the condition of a test speed of 50 mm/min, and the measured value at the maximum test force is defined as the agglomerate hardness (N).

16. A method of producing a resin composition, the method comprising a blending step of blending the light stabilizer composition according to any one of claims 10 to 15, with a synthetic resin.

17. A method of improving the blocking resistance of a light stabilizer composition, the method comprising blending:
a hindered amine compound comprising a compound represented by the following general formula (1): 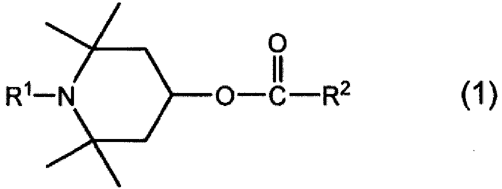 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 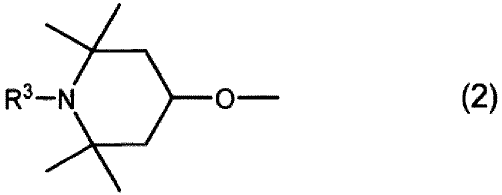 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)),
with
silica produced by the gel method.

18. A hindered amine compound for use in a light stabilizer composition, the composition comprising:
a hindered amine compound; and
silica produced by the gel method;
wherein the hindered amine compound comprises a compound represented by the following general formula (1): 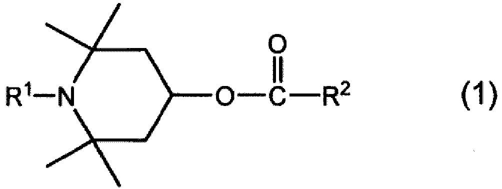 (wherein, in the general formula (1), R¹ represents a hydrogen atom, a hydroxyl group, a substituted or unsubstituted alkyl group having from 1 to 30 carbon atoms, or a substituted or unsubstituted alkoxy group having from 1 to 30 carbon atoms; and R² represents a substituted or unsubstituted alkyl group having from 1 to 30 carbon atoms, a substituted or unsubstituted alkenyl group having from 2 to 30 carbon atoms, or a group represented by the following general formula (2): 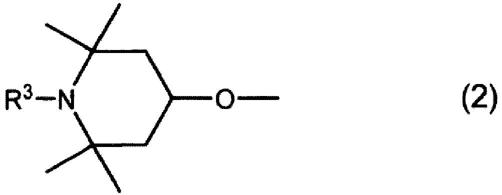 (wherein, in the general formula (2), R³ represents a hydrogen atom, a hydroxyl group, a substituted or unsubstituted alkyl group having from 1 to 30 carbon atoms, or a substituted or unsubstituted alkoxy group having from 1 to 30 carbon atoms)).
